## Europäisches Patentamt

## European Patent Office

## Office européen des brevets

(11) Veröffentlichungsnummer: **0 063 098**
**B1**

(12) # EUROPÄISCHE PATENTSCHRIFT

(45) Veröffentlichungstag der Patentschrift:
**25.09.85**

(51) Int. Cl.⁴: **C 25 C 3/14,** G 01 F 11/46

(21) Anmeldenummer: **82810056.0**

(22) Anmeldetag: **08.02.82**

(54) Vorrichtung zum Dosieren eines feinkörnigen, rieselfähigen Schüttgutes.

(30) Priorität: **27.02.81 CH 1329/81**

(43) Veröffentlichungstag der Anmeldung:
**20.10.82 Patentblatt 82/42**

(45) Bekanntmachung des Hinweises auf die Patenterteilung:
**25.09.85 Patentblatt 85/39**

(84) Benannte Vertragsstaaten:
**AT CH DE FR IT LI**

(56) Entgegenhaltungen:
**FR - A - 1 478 971**
**GB - A - 1 091 373**
**NL - C - 28 329**

(73) Patentinhaber: **SCHWEIZERISCHE ALUMINIUM AG,**
**CH-3965 Chippis (CH)**

(72) Erfinder: **Zengaffinen, Josef, Mutzenstrasse,**
**CH-3945 Steg (CH)**
Erfinder: **Arnold, Erwin, Route de Montana,**
**CH-3961 Venthône (CH)**

ACTORUM AG

## Beschreibung

Die Erfindung bezieht sich auf eine Vorrichtung zum dosierten Zuführen von Tonerde aus einem Tagessilo zu einem Krustendurchbruch einer Aluminiumschmelzflusselektrolysezelle.

Für die Gewinnung von Aluminium durch Schmelzflusselektrolyse von Aluminiumoxid wird dieses in einer Fluoridschmelze gelöst, die zum grössten Teil aus Kryolith besteht. Das kathodisch abgeschiedene Aluminium sammelt sich unter der Fluoridschmelze auf dem Kohleboden der Zelle, wobei die Oberfläche des flüssigen Aluminiums die Kathode bildet. In die Schmelze tauchen von oben Anoden ein, die bei konventionellen Verfahren aus amorphem Kohlenstoff bestehen. An den Kohleanoden entsteht durch die elektrolytische Zersetzung des Aluminiumoxids Sauerstoff, der sich mit dem Kohlenstoff der Anoden zu $CO_2$ und CO verbindet. Die Elektrolyse findet in einem Temperaturbereich von etwa 940 bis 970°C statt.

Im Laufe der Elektrolyse verarmt der Elektrolyt an Aluminiumoxid. Bei einer unteren Konzentration von 1–2 Gew.% Aluminiumoxid im Elektrolyten kommt es zum Anodeneffekt, der sich in einer Erhöhung der Spannung von beispielsweise 4 bis 5 V auf 30 V und darüber auswirkt. Spätestens dann muss die Aluminiumoxidkonzentration durch Zugabe von neuer Tonerde angehoben werden.

Die Zelle wird im normalen Betrieb üblicherweise periodisch bedient, auch wenn kein Anodeneffekt auftritt. Ausserdem muss bei jedem Anodeneffekt die Tonerdekonzentration durch Zugabe von neuem Aluminiumoxid angehoben werden, was einer Zellenbedienung entspricht.

Zur Zellenbedienung ist über lange Jahre die Kruste aus erstarrter Schmelze zwischen den Anoden und dem Seitenbord der Elektrolysezelle eingeschlagen und anschliessend neues Aluminiumoxid zugegeben worden. Diese heute noch weitgehend angewandte Praxis stösst auf zunehmende Kritik wegen Verschmutzung der Luft in der Elektrolysehalle und der äusseren Atmosphäre. Die Forderung nach Kapselung der Elektrolysezellen und die Behandlung der Abgase ist in den letzten Jahren zunehmend zur zwingenden Notwendigkeit geworden. Eine maximale Zurückhaltung der Elektrolysegase durch Kapselung kann jedoch nicht gewährleistet werden, wenn eine klassische Längsseitenbedienung zwischen den Anoden und dem Seitenbord der Zellen erfolgt.

In neuerer Zeit sind deshalb die Aluminiumhersteller immer mehr zur automatischen Bedienung in der Ofenlängsachse übergegangen. Die Tonerdezugabe erfolgt entweder lokal und kontinuierlich nach dem «Point-Feeder»-Prinzip oder nicht kontinuierlich über die ganze Zellenlängsachse. In beiden Fällen ist auf der Elektrolysezelle ein Vorratsbunker für Tonerde angeordnet. Entsprechendes gilt für die von der Anmelderin in jüngerer Zeit vorgeschlagene Querbedienung von Elektrolysezellen (DE-OS 2 731 908).

Die bekannten, auf den Elektrolysezellen angeordneten Vorratsbunker bzw. Tonerdesilos sind in Form von Trichtern oder Behältern mit einem trichterförmigen Unterteil ausgebildet. Der Inhalt der auf der Zelle angeordneten Silos deckt im allgemeinen einen ein- bis zweifachen Tagesbedarf. Die Tonerdezufuhr vom Silo zu einem Loch in der den schmelzflüssigen Elektrolyten überdeckenden Kruste erfolgt bei diesen bekannten Vorrichtungen mittels einer Dosierund Schubförderschnecke, einer Dosierschnecke und Druckluft, einer Dosierschnecke und einem Kolbenverdichter, einer Hub- und/oder Drehschleusenvorrichtung oder nach dem Zuckerstreuerprinzip. Bekannt ist auch die Tonerdezufuhr mittels Schwerkraftförderer und Fluidisierungsrinne.

Zahlreiche bekannte Dosiervorrichtungen weisen den Nachteil auf, dass sie störanfällig sind und/oder mit ungenügender Präzision arbeiten.

Aus der NL-PS 28 329, welche sich auf eine Mörtel- oder Betonmischanlage bezieht, sind Dosieranlagen mit zwei schwenkbaren Klappen bekannt. Diese Vorrichtung besitzt keinen am unteren Ende des Dosierrohres befestigten Auslauftrichter. Ausserdem sind die Achsen um die sich die schwenkbaren Klappen drehen lassen an der Gehäusewand befestigt und durchgreifen somit nicht die Stutzen des Silos bzw. des Dosierrohrs (vgl. Bild 2).

Die Erfinder haben sich die Aufgabe gestellt, eine störungsfrei und wirtschaftlich arbeitende Dosiervorrichtung für feinkörniges, rieselfähiges Schüttgut zu schaffen, welche sich durch hohe Fördergenauigkeit auszeichnet.

Die Aufgabe wird erfindungsgemäss gelöst durch eine Vorrichtung welche folgende Bauteile umfasst:

- ein am trichterförmigen Unterteil des Silos lösbar befestigtes, vertikales Dosierrohr mit einem an dessen unteren Ende befestigten in einen Austragstutzen mündenden unteren Auslauftrichter, wobei der in einen Auslaufstutzen übergehende Siloauslauftrichter als selbständiges, ebenfalls lösbares Element in das Dosierrohr hineinragt,

- je eine obere und eine untere, zylindersegmentförmig ausgebildete Klappe, welche um den Auslaufstutzen des Silos bzw. den Austragstutzen des Dosierrohrs durchgreifende Horizontalachsen von der horizontalen in die vertikale Position und umgekehrt schwenkbar sind, wobei die Klappen in horizontaler Lage vom unteren Rand des Auslaufstutzens bzw. des Austragstutzens einen geringen Abstand haben und der Klappenrand in vertikaler Richtung um mindestens denselben Abstand oberhalb dieser unteren Stutzenränder liegt, und wobei die schwenkbaren Horizontalachsen mit ausserhalb des Dosierrohres angeordneten Antriebsorganen versehen sind und die Höhe von Auslauf- und Austragstutzen grösser ist als deren entsprechender Durchmesser, und die Horizontalachsen in der unteren Hälfte der Stutzen angeordnet sind.

Die Dosiervorrichtung ist zweckmässig am trichterförmigen Unterteil des Silos lösbar angeflanscht. Muss die Dosiervorrichtung ersetzt oder sonst entfernt werden, kann ein weiter oben angeordneter Schieber geschlossen und die Flanschverbindung gelöst werden. So kann die Montage einer neuen Vorrichtung, welche auch die Lagerung der Horizontalachsen und die Antriebsorgane umfasst, innerhalb kürzester Zeit erfolgen. Nach dem Einsetzen einer neuen Dosiereinheit wird der Schieber wieder vollständig geöffnet.

Sowohl die obere als auch die untere Klappe ist als Hohlzylindersegment ausgebildet, wobei die im Auslauf- bzw. Austragstutzen gelagerte Horizontalachse auch die Längsachse des vollständigen Hohlzylinders wäre.

Die beiden offenen Enden der Klappen sind mit den Verbindungsstegen zu den Horizontalachsen verschlossen, so dass die Klappen eine Art Mulde bilden. Bei entsprechend dem Schüttwinkel über die unteren Ränder der Stutzen hinausragender Klappe in horizontaler Lage können die Behälter problemlos dicht verschlossen werden.

Bei den wie das Dosierrohr und die Trichter bevorzugt kreisrund ausgestalteten Auslauf- bzw. Austragstutzen ist die Höhe grösser als der Durchmesser, und die Horizontalachsen durchgreifen die Stutzen in der unteren Hälfte. Sind die Klappen in horizontaler Lage wenig, bevorzugt 0,5–5 mm, vom unteren Bord der Stutzen entfernt, so können sie vom Antriebsorgan in vertikaler Lage gedreht werden, ohne von einem Trichter behindert zu werden. Selbstverständlich muss das Dosierrohr einen derartigen Querschnitt aufweisen, dass diese Schwenkbewegung nicht behindert wird. Lagerungen und Antriebsorgane für die Horizontalachsen befinden sich ausserhalb des Dosierrohrs.

Die bei geöffneter unterer Klappe aus den Austragstutzen des Dosierrohres ausfliessende Tonerde fällt in freiem Fall in den Bereich des Krustendurchbruches. Soll die Tonerde näher zum Krustendurchbruch geführt werden, wird die untere Klappe auf einer Seite mit einem Auslaufrohr verbunden, das bevorzugt ungefähr tangential verläuft. Dieses Auslaufrohr zeigt bei geöffneter unterer Klappe schräg nach unten, beim Schliessen der Klappe wird es dagegen automatisch über die horizontale Lage hinaus nach oben gezogen.

In Ruhelage ist das Dosierrohr stets leer, d.h. die obere Klappe ist geschlossen. Bei über längere Zeit gefülltem Dosierrohr würde sich das Schüttgut bei Vibrationen oder anderen Bewegungen verdichten. In der Aluminiumelektrolyse würde sich insbesondere die Betätigung von Brechmeisseln nachteilig auswirken. Der Verdichtungseffekt würde zu ungenauen Chargen führen, was bei der erfindungsgemässen Vorrichtung, die bei korrekter Handhabung mit einer Genauigkeit von ca. 1% arbeitet, besonders nachteilig wäre.

In Füllstellung wird die obere Klappe geöffnet, und die untere Klappe geschlossen. Durch den Siloauslaufstutzen fliesst Schüttgut, bis der Schüttkegel den unteren Rand des Stutzens erreicht hat. Unmittelbar nach dem Erreichen der Füllhöhe wird die Vorrichtung in Ruhelage gebracht, bei welcher das Schüttgut ausfliesst.

Werden die obere und untere Klappe gleichzeitig gedreht, so kann in einer Zwischenposition kurzfristig gleichzeitig Tonerde aus dem Siloauslaufstutzen und dem Austragstutzen des Dosierrohres ausfliessen. Überraschend hat sich herausgestellt, dass dadurch die Präzision der Dosiermengen kaum merklich beeinflusst wird.

Sind die Antriebsorgane der Horizontalachsen unabhängig voneinander schwenkbar, so kann auch die untere Klappe in Ruhelage geschlossen sein. Dies hat den Vorteil, dass während der zeitlich dominierenden Ruhelage keine Ofenabgase in das Dosierrohr eindringen können. Weiter kann beim Anodenwechsel ein gegebenenfalls mit der unteren Klappe verbundenes Auslaufrohr angehoben und so dem mechanisch gefährlichen Wirkungsbereich der Anodenkörper entzogen werden, ohne dass eine Füllung der Dosiervorrichtung erfolgt.

Beim Füllen des Dosierrohres mittels unabhängiger Antriebsorgane muss also lediglich die obere Klappe geöffnet werden. Vor dem unmittelbar anschliessenden Entleeren wird die obere Klappe wieder geschlossen. Die untere Klappe wird geöffnet und nach dem Entleeren der Charge wieder geschlossen.

Bei einem Antriebsorgan für beide Horizontalachsen dagegen bleibt die untere Klappe in Ruhelage stets offen. Muss bei einem Anodenwechsel ein Auslaufrohr angehoben werden, so geht die Dosiervorrichtung automatisch in Füllstellung, d.h. die untere Klappe wird geschlossen, die obere geöffnet. Wegen der beim Anodenwechsel auftretenden Erschütterungen wird diese Charge verdichtet, sie ist also ungenau. In Anbetracht der zahlreichen zwischen den Anodenwechseln liegenden Dosierungen fällt jedoch eine einzelne ungenaue Charge nicht ins Gewicht und ist vernachlässigbar.

Die Erfindung wird anhand der Zeichnung näher erläutert. Die schematischen, teilweise aufgeschnittenen Ansichten zeigen:

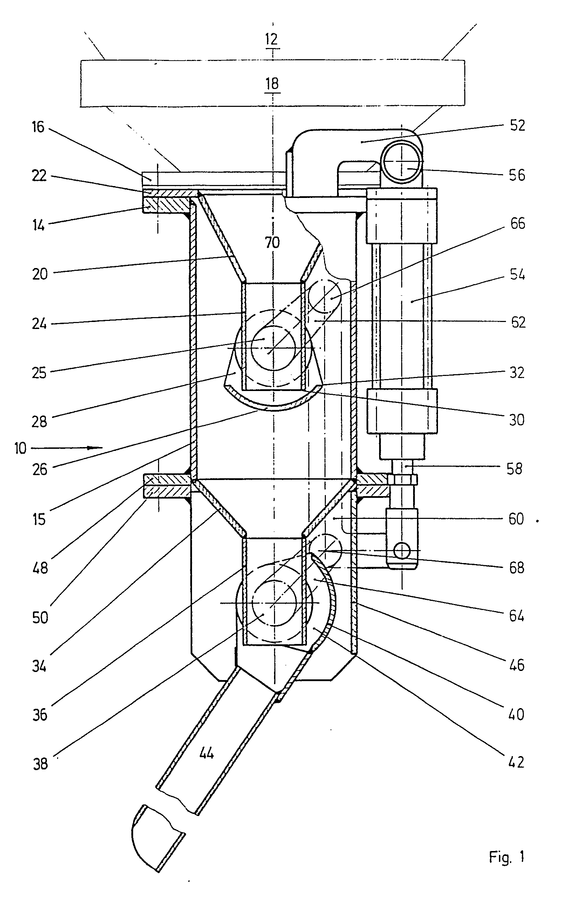

Fig. 1 eine Dosiervorrichtung mit starr miteinander verbundener oberer und unterer Klappe, in Ruhelage

Fig. 2 eine Dosiervorrichtung wie Fig. 1 in Füllstellung.

Eine auswechselbare Dosiervorrichtung 10 ist lösbar mit dem trichterförmigen Teil 12 eines Silos für Schüttgut verbunden. Dabei ist ein oberer Flansch 14 des Dosierrohres 15 mit einem unteren Flansch 16 des Silos verschraubt. Beim Auswechseln der Dosiervorrichtung 10 kann der sonst immer geöffnete Schieber 18 geschlossen werden.

Der funktionell unterste Teil 20 des Silos ist als selbständiges Element im Dosierrohr angeordnet und über einen festgeklemmten Flansch 22 so gehaltert, dass der Übergang zum trichterförmigen Teil 12 des Silos formschlüssig ist. Knapp unter der halben Höhe des Auslaufstutzen 24 liegt eine schwenkbare Horizontalachse 25, welche mit der oberen Klappe 26 über zwei stirnseitig angeordnete Verbindungsstege 28 starr verbunden ist.

In Ruhelage ist die obere Klappe 26 in horizontaler Position, deren Abstand vom unteren Rand 30 des Auslaufstutzens 24 1 mm beträgt. Die Ränder 32 der oberen Klappe 26 ragen in bezug auf die Vertikalrichtung ungefähr um 5 mm über den unteren Rand 30 des Auslaufstutzens 24 hinaus. So reichen der statische Druck und das Fliessvermögen des Füllgutes nicht aus, es über die Ränder 32 der Klappe hinausfliessen zu lassen, wodurch der Silo dicht verschlossen ist.

Der unterste Teil des Dosierrohres 15 verengt sich in Form eines Trichters 34 und geht in den Austragstutzen 36 über. In diesem Stutzen liegt – ebenfalls knapp unterhalb dessen halber Höhe – die schwenkbare Horizontalachse 38 für die untere Klappe 40, welche ihrerseits über zwei stirnseitige Verbindungsstege 42 starr mit der Achse verbunden ist. Ungefähr tangential ist ein Auslaufrohr 44 mit der Klappe 40 und der Achse 38 verbunden. Beim Schwenken der Horizontalachse 38 dreht das Auslaufrohr 44 mit.

An einem im untersten Bereich des Dosierrohres 15 befindlichen Flansch 48 ist über einen Flansch 50 ein Schutzgehäuse 46 für die untere Klappe 40 befestigt, welches einen vertikalen Schlitz für das schwenkbare Auslaufrohr 44 hat.

Am oberen Flansch 14 des Dosierrohres 15 ist eine Aufhängung 52 für den Druckzylinder 54 befestigt. Aufhängung und Druckzylinder sind über eine starre Achse 56 verbunden. Die aus dem Druckzylinder 54 herausragende Kolbenstange 58 ist pneumatisch oder hydraulisch betätigbar. Sie ist – ausserhalb des Dosierzylinders – über eine als starrer L-förmiger Kniehebel ausgebildete Verbindungsstange 60 mit dem oberen Klappenhebel 62 und dem unteren Klappenhebel 64 verbunden. Diese Klappenhebel stehen ihrerseits in festem mechanischem Eingriff mit den Horizontalachsen 25 und 38. Bei einer Bewegung des L-förmigen Kniehebels sind die Klappenhebel über eine obere Achse 66 und eine untere Achse 68 schwenkbar.

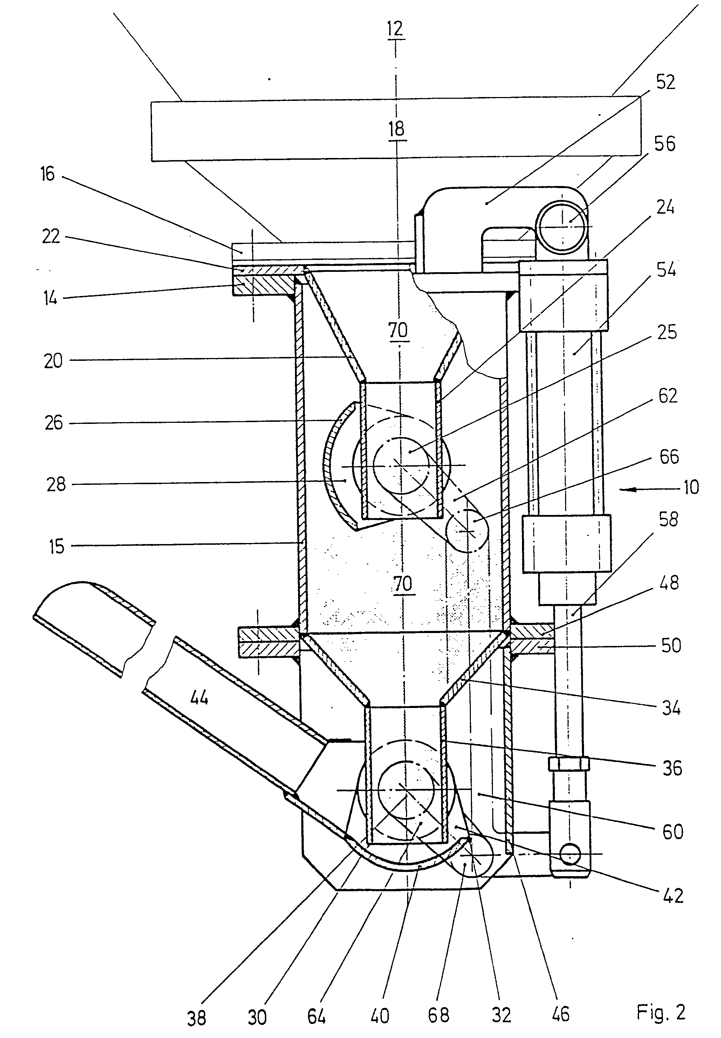

In Fig. 2 ist die Kolbenstange 58 abgesenkt worden und hat den L-förmigen Kniehebel 60 mitgenommen. Die Klappenhebel 62, 64 haben bewirkt, dass die obere Klappe 26 und die untere Klappe 40 gleichzeitig gedreht worden sind. Die untere Klappe 40 verschliesst nun den Austragstutzen 36. Die gleichzeitig in Vertikalposition gebrachte obere Klappe 26 gibt die Öffnung des Auslaufstutzens 24 frei. Die Tonerde 70 kann in das Dosierrohr 15 strömen, bis der untere Rand 30 des Auslaufstutzens 24 vom Schüttkegel erreicht ist. Unmittelbar danach werden die Klappen durch Heben der Kolbenstange 58 wieder in Ruhelage gebracht; die Tonerde 70 kann durch das ebenfalls nach unten geschwenkte Auslaufrohr 44 ausströmen.

## Patentansprüche

1. Vorrichtung zum dosierten Zuführen von Tonerde aus einem Tagessilo zu einem Krustendurchbruch einer Aluminiumschmelzflusselektrolysezelle, welche folgende Bauteile umfasst:

– ein am trichterförmigen Unterteil (12) des Silos lösbar befestigtes, vertikales Dosierrohr (15) mit einem an dessen unteren Ende befestigten in einen Austragstutzen (36) .mündenden unteren Auslauftrichter (34), wobei der in einen Auslaufstutzen (24) übergehende Siloauslauftrichter (20) als selbständiges, ebenfalls lösbares Element in das Dosierrohr (15) hineinragt,

– je eine obere und eine untere, zylindersegmentförmig ausgebildete Klappe (26, 40), welche um den Auslaufstutzen (24) des Silos bzw. den Austragstutzen (36) des Dosierrohrs (15) durchgreifende Horizontalachsen (25, 38) von der horizontalen in die vertikale Position und umgekehrt schwenkbar sind, wobei die Klappen (26, 40) in horizontaler Lage vom unteren Rand (30) des Auslaufstutzens (24) bzw. des Austragstutzens (36) einen geringen Abstand haben und der Klappenrand (32) in vertikaler Richtung um mindestens denselben Abstand oberhalb dieser unteren Stutzenränder liegt, und wobei die schwenkbaren Horizontalachsen (25, 38) mit ausserhalb des Dosierrohres (15) angeordneten Antriebsorganen versehen sind und die Höhe von Auslauf- (24) und Austragstutzen (36) grösser ist als deren entsprechender Durchmesser, und die Horizontalachsen (25, 38) in der unteren Hälfte der Stutzen (24, 36) angeordnet sind.

2. Vorrichtung nach Anspruch 1, dadurch gekennzeichnet, dass die obere Klappe (26) mit zwei stirnseitig angeordneten oberen Verbindungsstegen (28) starr mit der oberen Horizontalachse (25) und die untere Klappe (40) mit zwei stirnseitig angeordneten unteren Verbindungsstegen (42) starr mit der unteren Horizontalachse (38) verbunden sind, wobei die Verbindungsstege (28, 42) die Stirnseiten der Klappen (26, 40) schliessen.

3. Vorrichtung nach Anspruch 1 oder 2, dadurch gekennzeichnet, dass die Klappen in horizontaler Lage 0,5–5 mm vom unteren Rand der Stutzen entfernt sind.

4. Vorrichtung nach mindestens einem der Ansprüche 1–3, dadurch gekennzeichnet, dass die untere Klappe (40) auf einer Seite ungefähr tangential mit einem Auslaufrohr (44) versehen ist, welches mit der Klappe (40) schwenkbar ist.

## Claims

1. A mechanism for the feeding of measured quantities of alumina from a daybin to a puncture in the crust in an aluminium fusion electrolysis cell, the mechanism comprising the following components:

– a vertical metering-tube (15) detachably fastened to the funnelshaped bottom part (12) of the bin and having at the bottom and fastened to the bottom end of it a discharge funnel (34) opening into a discharge nozzle (36), the bin discharge funnel (20) continuing into a discharge nozzle (24) and projecting as an independent likewise detachable member into the metering-tube (15);

– one upper and one lower flap (26, 40), each made in the shape of a segment of a cylinder, which are able to pivot from the horizontal position into the vertical position and back, about horizontal spindles (25, 38) which pass through the discharge nozzle (24) from the bin and the discharge nozzle (36) from the metering-tube (15) respectively, the flaps (26, 40) lying in the horizontal position at a short distance from the bottom edge (30) of the discharge nozzle (24) or respectively of the discharge nozzle (36) and the edge (32) of the flap lying above these bottom edges of the nozzles in the vertical direction by a distance which is at least the same, the pivotable horizontal spindles (25, 38) being provided with driving members arranged outside the metering-tube (15) and the heights of the discharge nozzle (24) and of the discharge nozzle (36) being greater than their corresponding diameters, with the horizontal spindles (25, 38) arranged in the lower halves of the nozzles (24, 36).

2. A mechanism as in Claim 1, characterized in that the upper flap (26) is connected rigidly to the upper horizontal spindle (25) by two upper connecting webs (28) arranged at the endfaces and the lower flap (40) is connected rigidly to the lower horizontal spindle (38) by two lower connecting webs (42) arranged at the endfaces, the connecting webs (28, 42) closing the endfaces of the flaps (26, 40).

3. A mechanism as in Claim 1 or 2, characterized in that the flaps in the horizontal position are 0.5–5 mm away from the bottom edges of the nozzles.

4. A mechanism as in at least one of the Claims 1–3, characterized in that the lower flap (40) is provided at one side approximately tangentially with an outlet tube (44) which is able to pivot with the flap (40).

## Revendications

1. Dispositif pour l'acheminement dosé d'alumine d'un silo journalier à une brèche de la croûte d'une cellule d'électrolyse ignée de l'aluminium, qui comprend les éléments suivants:

– un tube doseur vertical (15), fixé par des liaisons démontables à la partie inférieure (12) en entonnoir du silo, et muni d'un entonnoir de sortie inférieur (34) fixé à l'extrémité inférieure de ce tube et qui débouche dans une tubulure de déchargement (36), l'entonnoir de sortie (20) du silo qui se termine dans une tubulure de sortie (24) faisant saillie dans le tube doseur (15) en constituant un élément indépendant, également démontable,

– une trappe supérieure (26) et une trappe inférieure (40), toutes deux en forme de segment de cylindre, qui peuvent tourner autour d'axes horizontaux (25, 38) qui traversent respectivement la tubulure de sortie (24) du silo et la tubulure de déchargement (36) du tube doseur (15), pour passer de la position horizontale à la position verticale ou inversement, les trappes (26, 40) se trouvant, dans la position horizontale, à une petite distance du bord inférieur (30) de la tubulure de sortie (24) pour l'une et de la tubulure de déchargement (36) pour l'autre, et le bord (32) de la trappe se trouvant à une distance verticale au-dessus du bord inférieur de la tubulure correspondante qui est au moins égale à cette distance et

– les axes oscillants horizontaux (25, 38) étant munis d'organes d'entraînement disposés à l'extérieur du tube doseur (15) et la hauteur de la tubulure de sortie (24) et celle de la tubulure de déchargement (36) étant plus grandes que leurs diamètres respectifs et les axes horizontaux (25, 38) étant agencés dans la moitié inférieure des tubulures (24, 36).

2. Dispositif selon la revendication 1, caractérisé en ce que la trappe supérieure (26) est reliée rigidement à l'axe horizontal supérieur (25) au moyen de deux voiles de liaison supérieurs (28) disposés en position frontale et la trappe inférieure (40) étant reliée rigidement à l'axe horizontal inférieur (38) au moyen de deux voiles de liaison inférieurs (42) disposés en position frontale, les voiles de liaison (28, 42) fermant les côtés frontaux des trappes (26, 40).

3. Dispositif selon l'une des revendications 1 et 2 caractérisé en ce qu'en position horizontale, les trappes sont éloignées de 0,5 à 5 mm du bord inférieur des tubulures.

4. Dispositif selon au moins l'une des revendications 1 à 3, caractérisé en ce que la trappe inférieure (40) est munie, d'un côté, et dans une orientation à peu près tangentielle, d'un tube de sortie (44) qui peut tourner avec la trappe (40).

0 063 098

Fig. 1

7

Fig. 2